Europäisches Patentamt

European Patent Office

Office européen des brevets

(11) Veröffentlichungsnummer: **0 044 925**
**B1**

(12) **EUROPÄISCHE PATENTSCHRIFT**

(45) Veröffentlichungstag der Patentschrift: **18.09.85**

(51) Int. Cl.⁴: **B 27 G 21/00, B 23 Q 11/08**

(21) Anmeldenummer: **81104403.1**

(22) Anmeldetag: **09.06.81**

(54) **Handhobel mit einer motorisch angetriebenen Messerwalze.**

(30) Priorität: **24.07.80 DE 3027988**
**28.03.81 DE 3112369**

(43) Veröffentlichungstag der Anmeldung:
**03.02.82 Patentblatt 82/05**

(45) Bekanntmachung des Hinweises auf die
Patenterteilung:
**18.09.85 Patentblatt 85/38**

(84) Benannte Vertragsstaaten:
**DE GB IT NL**

(58) Entgegenhaltungen:
**EP-A-0 003 778**
**CH-A- 354 926**
**DE-A-2 107 139**
**DE-C- 138 402**
**DE-C- 543 496**
**FR-A- 424 174**

(73) Patentinhaber: **ROBERT BOSCH GMBH**
**Postfach 50**
**D-7000 Stuttgart 1 (DE)**

(72) Erfinder: **Schädlich, Fritz, Ing. grad.**
**Panoramastrasse 4**
**D-7022 Leinfelden (DE)**
Erfinder: **Armbruster, Gerhard**
**Bernhauserstrasse 11**
**D-7000 Stuttgart 70 (DE)**
Erfinder: **Neubert, Werner**
**Dattelweg 23**
**D-7000 Stuttgart 75 (DE)**
Erfinder: **Berger, Guenter**
**Mozartstrasse 33**
**D-7311 Notzingen (DE)**

Courier Press, Leamington Spa, England.

**Beschreibung**

Stand der technik

Die Erfindung geht aus von einem Handhobel nach der Gattung des Hauptanspruchs. Es ist schon ein solcher Handhobel bekannt geworden aus der DE—AS—28 06 822, bei dem jedoch zum Öffnen der Schutzabdeckung vor dem Ansetzen an ein Werkstück mit der freien Hand eine ganz in der Nähe der Hobelmesser angeordnete Handhabe ertastet werden muß, die seitlich an der Schutzabdeckung angebracht ist. Beim Öffnen der Schutzabdeckung gelangen dabei die Finger des Bedienenden in unmittelbare Nähe der Hobelmesser. Hieraus ergibt sich eine nicht zu vertretende Unfallgefahr.

Auch eine mit der DE—C—543 496 bereits bekannt gewordene Konstruktion kann hier nicht voll befriedigen. Wenn der Bedienende dort die Schuztabdeckung zurückschwenken will, ohne daß diese dabei am Werkstück abgestützt wird, muß er beide Handgriffe der Handhobelmaschine erfassen und einen davon um seine Achse drehen. Diese Achse fällt mit der Drehachse der Messerwalze dieser Handhobelmaschine zusammen. Verdreht man eine der haltenden Hände gegenüber der anderen, ist eine Verkanten der Messerwalze kaum zu vermeiden. Ein einhändiges Führen der Handhobelmaschine und gleichzeitiges Zurückschwenken der Schutzandeckung vor dem Berühren des Werkstücks ist ausgeschlossen. Das durch diesen Stand der Technik an sich bekannte Drehen des Handgriffs zum Schwenken der Schutzabdeckung ist nicht brauchbar für eine Bedienung der Schutzabdeckung aus der Nähe eines festen Handgriffs, der auch zur einhändigen Bedienung der Handhobelmaschine geeignet ist. Hier sind lediglich Fingerbewegungen entlang einer Gehäusewand oberhalb der Messerwalze möglich, die in eine Bewegung in Richtung des Umfangs der Messerwalze umgewandelt werden müssen.

Vorteile der erfindung

Der erfindungsgemäße Handhobel mit den kennzeichnenden Merkmalen des Hauptanspruchs hat den Vorteil, daß eine Figerbewegung entlang einer Gehäusewand oberhalb der Messerwalze auf einfachste Weise in eine Bewegung in Umfangsrichtung der Messerwalze gewandelt werden kann, ohne daß das Verbindungsglied zwischen der Handhabe und der Schutzabdeckung in den Flugkreis der Messerwalze gerät.

Durch die in den Unteransprüchen aufgeführten Maßnahmen sind vorteilhafte Weiterbildungen und Verbesserungen des im Hauptanspruch angegebenen Handhobels möglich. Besonders vorteilhaft für einen einfachen und auch in der Teileherstellung kostengünstigen Aufbau sowie eine leichte und schnelle Montage ist die Ausbildung der Sicherungsvorrichtung mit einer seitlich in Nuten geführten Schutzabdeckung, einer als seitlich in Nuten geführter Schieber ausgebildeten Handhabe und einer die Schutzabdeckung mit der Handhabe verbindenden Koppel aus biegeelastischem Band. In eine der durch die Längsteilung des Maschinengehäuses erhaltenen zwei Schalen kann die gesammte Schutzvorrichtung fertig vormontiert werden. Die Montage ist vollständig beendet, nachdem lediglich die zweite Schale des Maschinengehäuses mit der ersten Schale zusammenefügt worden ist. Die gegen Späne abgedichtete Schließfeder für die Schutzabdeckung verhindert das Blockieren der Schließfeder durch zwischen Federwindungen geklemmte Späne.

Zeichnung

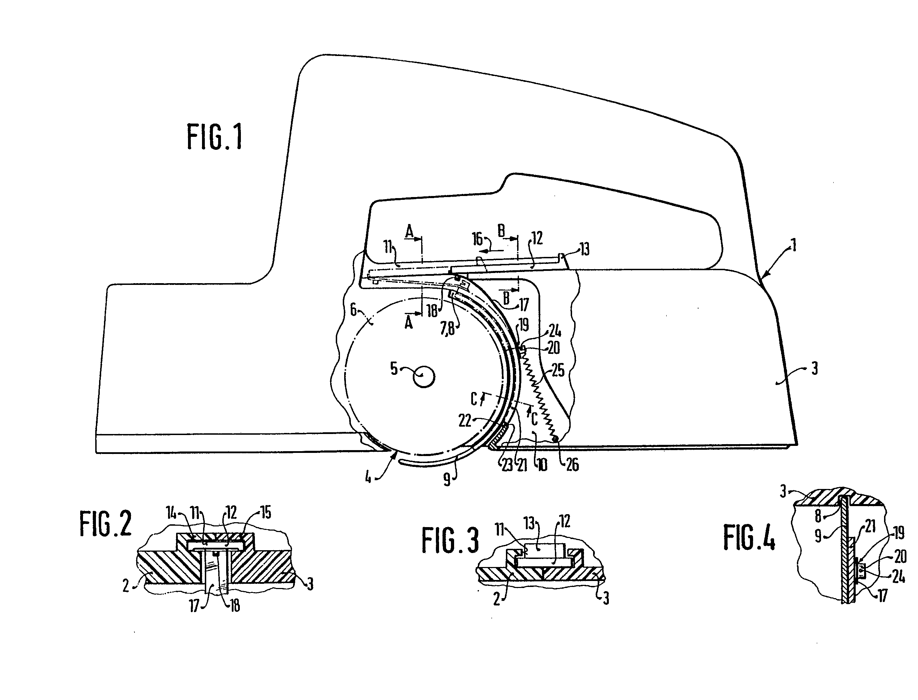

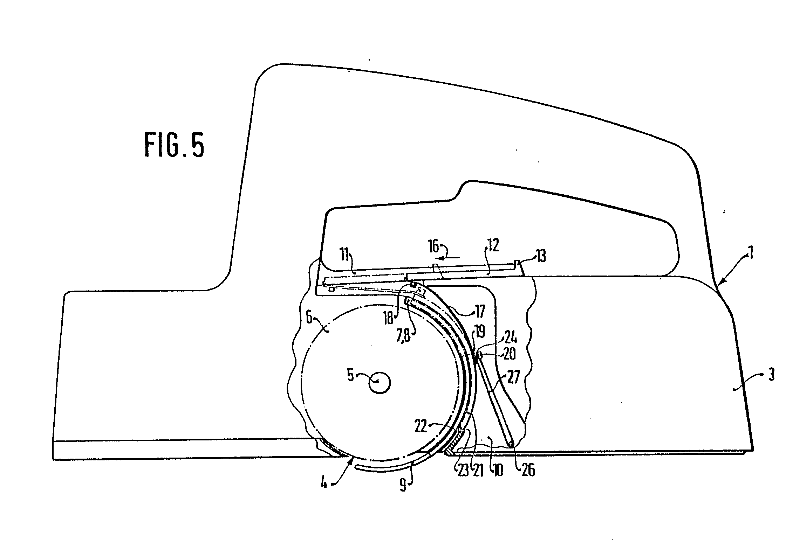

Ein Ausführungsbeispiel des Erfindungsgegenstandes ist in der Zeichnung dargestellt und in der nachfolgenden Beschreibung näher erläutert. Es zeigen Fig. 1 einen erfindungsgemäßen Handhobel in der Seitenansicht mit einem die gesamte Schutzvorrichtung frei legenden Ausschnitt, Fig. 2 einen Teilschnitt A—A zu Fig. 1, Fig. 3 einen Teilschnitt B—B zu Fig. 1 und Fig. 4 einen Teilschnitt C—C zu Fig. 1, als erstes Ausführungsbeispiel. Ein zweites Ausführungsbeispiel ist in Fig. 5 dargestellt die gewählte Seitenansicht entspricht der gem. Fig. 1.

Beschreibung des 1. Ausführungsbeispiels

Ein Maschinengehäse 1 eines Handhobels ist längs geteilt und bildet so zwei Schalen 2 und 3. Die in der Darstellung gemäß Fig. 1 Oberen Schalenteile bilden einen Griffbügel, die unteren Schalenteile den Hauptkörper des Maschinengehäuses 1, in dem neben einem nicht dargestellten Antrieb eine Messerwalze 4 gelagert ist. Von dieser Messelwalze 4 ist nur deren Welle 5 stark gezeichnet, während der Messerflugkreis 6 der Messerwalze 4 strichpunktiert angegeben ist. Die Schalen 2 und 3 bilden einander gegenüberstehende,nnach innen offene Führungsnuten 7 und 8 für eine Schutzabdeckung 9 in einem die Messerwalze 4 aufnehmenden Hohlraum 10. Die den Hohlraum 10 in der Darstellung gemäß Fig. 2 nach oben abdeckende, von den Schalen 2 und 3 gebildete Gehäusewand formt auch eine Führung 11 für einen Schieber 12. Am in den freien Raum zwischen dem Hauptkörper des Maschinengehäuses und dem Griffbügel ragenden Ende des Schiebers 12 ist dieser Schieber 12 mit einer Handhabe 13 versehen. Abdeckungen 14 und 15 für die Führung 11 bieten dieser Handhabe 13 in der durch einen Pfeil 16 angegebenen Betätigungsrichtung einen Anschlag. Am führungsinneren Ende des Schiebers 12 ist ein Stahlband 17 mit einem Nietbolzen 18 befestigt. Das andere Ende dieses Stahlbandes 17 bildet eine Öse 19, die über eine Nase 20 gehängt ist. Die Nase 20 ist von einem Verstärkungsblech 21 getragen, das mit der Schutzabdeckung 9 fest verbunden ist. Das Verstärkungsblech 21 ist auf die äußere Mantelfläche der zylindrisch gewölbten Schutzabdeckung 9 aufgeklebt oder in anderer Weise mit ihr verbunden, angrenzend an die parallel zur Achse der Messelwalze 4 verlaufende Kante innerhalb des Hohlraums 10. Das Verstärkungsblech 21 bedeckt nur etwa ein Drittel der Oberfläche der Schutzabdeckung 9 und verbleibt stets innerhalb des Hohlraums 10. Seine Kante 22 begrenzt zusammen mit einer Anschlagfläche 23 die Schließbewegung der Schutzabdeckung 9. Die Nase 20 besitzt eine Bohrung 24, die vom Ende einer an der Nase 20 angehängten Zugfeder 25 durchgriffen wird. Ein Stift 26, der in der Schale 2 befestigt ist, dient als Widerlager für die Zugfeder 25.

Zur Montage wird die Schale 3, mit die der Schale 2 über hier nicht dargestellte Schrauverbindungen zusammengehalten wird, von der Schale 2 gelöst. In die Führungsnut 7 setzt man eine Seitenkante der Schutzabdeckung 9 ein, so daß sich das Verstärkungsblech 21 im Hohlraum 10 befindet. Zugleich wird der Schieber 12 in die der Schale 2 zugehörige Hälfte der Führung 11 eingesetzt. Danach hängt man das Stahlband 17 mit seiner Öse 19 über die Nase 20. Die so hergestellte Verbindung zwischen der Schutzabdeckung 9 und dem Schieber 12 wird gesichert durch Einhängen des Endes der Zugfeder 25 in die Bohrung 24. Nun wird die Zugfeder 25 gespannt und ihr bis dahin freies Ende am Stift 26 eingehängt. Die Sicherungsvorrichtung ist damit in die Schale 2 montiert. Mit dem Aufsetzen der Schale 3 auf die Schale 2 wird der Einbau der Sicherungsvorrichtung vollendet. Im Ruhezustand des Handhobels hält die Zugfeder 25 die Schutzabdeckung 9 in Schließstellung, wobei das Verstärkungsblech 21 mit seiner Kante 22 an der Anschlagfläche 23 anliegt. Der Schieber 12 befindet sich innerhalb seiner Führung 11 in der in Fig. 1 stark gezeichneten Stellung. Soll der Handhobel direkt auf die Fläche eines Werkstücks aufgesetzt werden, so daß die Vorderkante der Schutzabdeckung 9 nicht an eine Werkstückkante anlaufen kann, um die Schutzabdeckung 9 in Freigebestellung zu bewegen, so betätigt man den Schieber 12 mittels seiner Handhabe 13. Man verschiebt ihn in Richtung des Pfeils 16 bis in die strichpunktiert eingezeichnete Stellung. Über das als Koppel dienende Stahlband 17 nimmt der Schieber 12 dabei über die Nase 20 und das Verstärkungsblech 21 die Schutzabdeckung mit. Auch deren Offenstellung ist in Fig. 1 strichpunktiert eingezeichnet. Die Zugfeder 25 wird dabei gespannt. Sobald der Schieber 12 losgelassen wird, sucht die Zugfeder 25 die Gehäuseöffnung wieder mittels der Schutzabdeckung 9 zu schließen. Solange der Handhobel noch auf einem Wetkstück aufliegt, gelingt dies nicht, weil sich die Vorderkante der Schutzabdeckung 9 auf der Werkstückoberfläche abstützt. Sobald der Bearbeitungsvorgang beendet und der Handhobel vom Werkstück abgehoben ist, hat die Zugfeder 25 die Schutzabdeckung 9 auch wieder in ihre Schließstellung gebracht.

Es zeigt sich, daß die Schutzabdeckung 9 im Bedarfsfalle völlig gefahrlos manuell in Freigabestellung bewegbar ist. Die für die Schutzvorrichtung erforderlichen Bauteile sind denkbar einfach und leicht zu montieren.

Im zweiten Ausführungsbeispiel gem. Fig. 5 ist lediglich anstelle der Zugfeder 25 ein gummielastisches Federband 27 gewählt. Dieses gummielastisches Federband 27 hat den Vorteil, daß durch seine geschlossene Form das Blockieren durch eingeklemmte Späne vermieden wird. Auf diese Weise wird die Schutzabdeckung 9 absolut zuverlässig in ihre Schließstellung gebracht.

## Patentansprüche

1. Handhobel mit einer motorisch angetriebenen Messerwalze in einem mindestens eine ebene Führungsfläche und einen Handgriff oberhalb der Messerwalze aufweisenden Gehäuse, die durch einen Gehäuseschlitz nach außen tritt und in diesem Bereich bei Nichtgebrauch durch eine selbsttätig in Schließstellung gedrängte Schutzadeckung übergriffen wird, die ihrerseits vom Druck des Werkstücks oder im Bedarfsfalle vor dem Ansetzen an ein Werkstück manuell in Freigabestellung bewegbar ist, dadurch gekennzeichnet, daß, die Schutzabdeckung (9) zum Zurückziehen in ihre Freigabestellung über ein biegeelastisches Band (17) mit einer in der Nähe des Maschinenhandgriffs und außerhalb des Gefahrenbereichs der Messerwalze (4) angeordneten, relative zum Maschinengehäuse (1) verstellbaren Handbare (12, 13) verbunden ist.

2. Handhobel nach einem der Ansprüche 1 und 2, dadurch gekennzeichnet, daß das Band mit einer durch sie gebildeten Öse (19) über eine Nase (20) oder dergleichen an der Schutzabdeckung (9) eingehängt und dort mittels eines durch eine Bohrung (24) in dieser Nase (20) eingehängten Federendes einer die Schutzabdeckung (9) in Schließstellung drängenden Feder (25) gesichert ist.

3. Handhobel nach einem der Ansprüche 1 und 2, dadurch gekennzeichnet, daß die Verstellhandhabe ein Schieber (12) ist.

4. Handhobel nach einem der Ansprüche 1 bis 3, dadurch gekennzeichnet, daß der Schieber (12) und das biegeelastische Band (17) fest miteinander verbunden, beispielsweise miteinander vernietet (18) sind.

5. Handhobel nach einem der Ansprüche 1 bis 4, dadurch gekennzeichnet, daß das Maschinengehäuse (1) längsgeteilt ist und so zwei Schalen (2, 3) bildet, deren eine ein festes Widerlager, z.B. einen Stift (26), für das freie Ende der Feder (25) aufweist.

6. Handhobel nach einem der Ansprüche 1 bis 5, dadurch gekennzeichnet, daß die Schalen (2, 3) einander gegenüber stehende Führungsnuten (7, 8, 11) für die Schutzabdeckung (9) und den Schieber (12) bilden.

7. Handhobel nach einem der Ansprüche 1 bis 6, dadurch gekennzeichnet, daß die die Schutzabdeckung (9) in Schließstellung drängende Feder (27) gegen Späne abgedichtet ist.

8. Handhobel nach einem der Ansprüche 1 bis 7, dadurch gekennzeichnet, daß die Feder (27) eine geschlossene Form hat und aus gummielastischen Material gefertigt ist.

9. Handhobel nach einem der Ansprüche 1 bis 8, dadurch gekennzeichnet, daß die Feder (27) als gummielastisches Federband ausgebildet ist.

## Revendications

1. Robot à main comportant un tambour porte-couteau entraîné par un moteur, dans un boîtier comportant au moins une surface de guidage plane et une poignée au-dessus du tambour porte-couteau, tambour qui vient en saillie à travers une fente du boîtier et est recouvert dans cette zone, lorsque le rabot n'est pas utilisé, par un capot de protection poussé automatiquement en position de fermeture, capot qui peut lui-même être déplacé en position de libération, par la pression de la pièce ou le cas échéant avant la mise en place contre la pièce, manuellement, caractérisé en ce que pour être tiré en arrière en position de libération, le capot de protection (9) est relié par l'intermédiaire d'une bande élastique souple (17) à une poignée (12, 13) placée au voisinage de la poignée de la machine et en dehors de la zone de danger constitué par le tambour porte-couteau (14), cette poignée étant réglable par rapport au boîtier (1) de la machine.

2. Robot à main selon l'une des revendications 1 et 2, caractérisé en ce que la bande est accrochèe par l'intermédiaire d'un oeillet (19) qu'elle forme par-dessus un bec (20) ou analogue du capot de protection (9) et y est fixée à l'aide d'un ressort (25) poussant le capot de protection (9) en position de fermeture et dont l'extrémité de ressort est accrochée à travers un perçage (24) dans ce bec (20).

3. Robot à main selon l'une des revendications 1 et 2, caractérisé en ce que la poignée réglable est un coulisseau (12).

4. Robot à main selon l'une des revendications 1 à 3, caractérisé en ce que le coulisseau (12) et la bande élastique (17) sont reliés solidairement par exemple par rivetage (18).

5. Robot à main selon l'une des revendications 1 à 4, caractérisé en ce que le carter (1) de la machine est subdivisé longitudinalement et forme ainsi deux coquilles (2, 3) dont l'une comporte un appui fixe par exemple un goujon (26) pour l'extrémité libre du ressort (25).

6. Robot à main selon l'une des revendications 1 á 5, caractérisé en ce que les coquilles (2, 3) forment des rainures de guidage (7, 8, 11) opposées l'une à l'autre pour le capot de protection (9) et le coulisseau (12).

7. Robot à main selon l'une des revendications 1 à 6, caractérisé en ce que le ressort (27) qui pousse le capot de protection (9) en position de fermeture est enfermé de façon étanche vis-à-vis des copeaux.

8. Robot à main selon l'une des revendications 1 à 7, caractérisé en ce que le ressort (27) a une forme fermée et est constitué en un matériau ayant l'élasticité du caoutchouc.

9. Robot à main selon l'une des revendications 1 à 8, caractérisé en ce que le ressort (27) est une bande de ressort ayant l'élasticité du caoutchouc.

## Claims

1. Hand plane with a motor-driven cutter block in a casing having at least one even guide surface and a handle above the cutter block, which moves out through a casing slit and is covered in this area by a protective guard which is automatically forced into the closed position when not in use and in turn can be moved into the clear position by the pressure of the workpiece or, if need be, manually before applying to a workpiece, characterised in that, to retract it into its clear position, the protective guard (9) is connected via a flexible strip (17) to a grip (12, 13) adjustable relative to the machine casing (1) and arranged in the vicinity of the machine handle and outside the hazard zone of the cutter block (4).

2. Hand plane according to Claim 1, characterised in that the strip is hooked with an eye (19) which it forms on the protective guard (9) via a nose (20) or the like and is secured there by one end of a spring (25), forcing the protective guard (9) into the closed position, hooked through a bore (24) in this nose (20).

3. Hand plane according to one of Claims 1 and 2, characterised in that the adjusting grip is a slide (12).

4. Hand plane according to one of claims 1 to 3, characterised in that the slide (12) and the flexible strip (17) are rigidly connected to each other, for example riveted to each other (18).

5. Hand plane according to one of Claims 1 to 4, characterised in that the machine casing (1) is longitudinally split and thus forms two shells (2, 3), one of which has a fixed counter bearing, e.g. a pin (26), for the free end of the spring (25).

6. Hand plane according to one of Claims 1 to 5, characterised in that the shells (2, 3) form opposing guide grooves (7, 8, 11) for the protective guard (9) and the slide (12).

7. Hand plane according to one of Claims 1 to 6, characterised in that the spring (27) forcing the protective guard (9) into the closed position is sealed off against chips.

8. Hand plane according to one of Claims 1 to 7, characterised in that the spring (27) has an enclosed form and is made of elastomeric material.

9. Hand plane according to one of Claims 1 to 8, characterised in that the spring (27) is formed as an elastomeric spring strip.

FIG.1

FIG.2

FIG.3

FIG.4

FIG.5